# FASCICULE DE BREVET EUROPEEN

(11) **EP 3 215 046 B1**
(45) Date de publication et mention de la délivrance du brevet: **17.10.2018**
(21) Numéro de dépôt: 15801912.5
(22) Date de dépôt: 09.11.2015
(51) Int. Cl.: A61C 1/12, A61C 1/02, A61C 1/07, F16H 25/14

(54) **TÊTE DE CONTRE ANGLE**
WINKELSTÜCKKOPF
COUNTER-ANGLE HEAD

(30) Priorité: 07.11.2014 FR 1460763
(43) Date de publication de la demande: 13.09.2017
(73) Titulaire: Micro Mega International Manufactures, 25000 Besancon (FR)
(72) Inventeur: LEVY, Guy-Charles, 13008 Marseille (FR)
(74) Mandataire: Cabinet Bleger-Rhein-Poupon
(86) Numéro de dépôt international: PCT/FR2015/053025
(87) Numéro de publication internationale: WO 2016/071656

(56) Documents cités:
- FR-A1- 2 477 407
- US-A- 4 834 653
- US-A- 5 931 672

## Description

La présente invention a pour objet un dispositif d'entraînement pour une procédure endodontique automatisée.

Différents dispositifs ont été proposés pour automatiser la procédure endodontique, tout d'abord en proposant une tête d'entraînement des instruments de coupe par une rotation alternative, de même amplitude, de ces instruments. Des échecs ont été constatés car lors de la friction importante des lames des limes sur la dentine intracanalaire, les mouvements de rotations alternatives provoquaient des fractures des limes engagées dans le canal. D'autres échecs ont été constatés comme faux canaux dans les courbures canalaires ou perforations.

Depuis la mise sur le marché d'instruments fabriqués à partir de métaux particuliers à base de nickel titane, la rotation continue, lente, d'instruments adaptés à la coupe a été proposée à l'aide de contre angles produisant cette rotation lente. Mais devant la constance des échecs, en particulier les fractures instrumentales sur canaux courbes, l'automatisation par rotation partielle alternative a de nouveau été proposée dans les documents EP 2 438 884 et US 2012/107766, en espérant minimiser les inconvénients cités plus haut par l'utilisation associée d'instruments nickel titane . Le document US 4 834 653 décrit également une tête de contre angle selon le préambule de la revendication 1.

Une autre alternative a été proposée par le présent inventeur, elle est basée sur une étude de la dynamique instrumentale lors des différentes phases de la procédure endodontique. Ces recherches ont donné lieu au brevet EP 0 161 196, mais surtout à des publications dans les journaux spécialisés par exemple l'Information Dentaire du 05/06/1986 n°23 sous le titre : « Etude fondamentale sur le principe de fonctionnement d'un système automatisé.. ». Le principe consiste à permettre un déplacement de translation alternatif d'amplitude variable en fonction de la résistance rencontrée par les lames d'une lime au cours de son déplacement axial et surtout de permettre un mouvement hélicoïdal à partir du mouvement de translation, car les forces de résistances rencontrées par lesdites lames inclinées de la lime sur les parois du canal, entraînent la lime en rotation. Ce mouvement hélicoïdal aura une rotation plus ou moins marquée en fonction des forces de résistance à la coupe des lames ou cours du déplacement de la lime. Il convient donc de donner à la lime une liberté de rotation au cours de son déplacement.

Pour permettre à la fois le déplacement de translation alternative d'amplitude variable et cette liberté de rotation, il a été proposé une tête d'entraînement comportant un corps pourvu d'une cavité recevant un noyau porte instrument accouplé à des moyens d'entrainement permettant de lui communiquer des mouvements axiaux alternatifs, où ledit noyau porte instrument est agencé d'une part, de manière à permettre un déplacement alternatif de l'instrument le long de son axe longitudinal, et d'autre part de façon à conférer audit instrument une liberté de mouvement de rotation autour dudit axe.

Pour ce faire, l'axe d'entraînement est équipé d'un excentrique logé dans une fente ou rainure logée dans le noyau porte instrument de forme cylindrique. Cette rainure a une longueur inférieure à un arc de 180° et une hauteur avec un jeu relativement important entre l'excentrique et l'une ou l'autre des parois supérieure ou inférieure de la rainure.

L'amplitude minimum des mouvements longitudinaux alternatifs correspondant à l'excentricité de l'excentrique est fixée à 0,5mm et une amplitude maximum correspondant à l'excentricité augmentée de la valeur du jeu existant entre les parois de la rainures et l'excentrique soit pour un jeu de 0,75mm, un total de 1,25 mm.

Les problèmes rencontrés à l'usage d'un tel montage ont été de trois ordres :
En premier lieu, quand une lime d'Hedstroem, instrument dont les lames sont actives en traction et inactives en descente, montée sur un tel contre angle, rencontre lors de la traction pour la coupe de la dentine intracanalaire (donc lors de la remontée du noyau porte instrument) une résistance forte, et que l'instrument ne peut remonter, le contre-angle sera entraîné en profondeur, et pourrait dépasser la longueur de travail autorisée si l'opérateur ne peut retenir cette descente.

En second lieu il faut citer l'impression désagréable ressentie par les patients dans certaines circonstances : en particulier lors de l'usage d'une lime de type K qui atteint un obstacle : rétrécissement brutal de la lumière canalaire, ou une calcification de cette lumière, ou bien encore quand le diamètre de la lime est inapproprié par rapport au vide canalaire : la pointe de l'instrument viendra percuter l'obstacle ou les parois canalaires en créant une vibration désagréablement ressentie par le patient. Ce que certains ont appelé l'effet marteau piqueur.

La présente invention a pour but de remédier aux divers inconvénients précités, en proposant un dispositif d'entraînement pour contre angle, dont la conception nouvelle du noyau porte instrument permet d'agir sur la valeur du déplacement du noyau au cours de l'utilisation dudit contre angle.

Selon l'invention, la tête de contre angle, servant à l'entraînement d'un instrument d'intervention sur des racines dentaires, constituée d'un corps qui comporte une cavité de forme générale cylindrique dans laquelle se déplace, axialement et en pivotement, un noyau porte-instrument, également de forme générale cylindrique, conformé pour recevoir et maintenir ledit instrument, ledit noyau porte-instrument comportant latéralement une rainure ou coulisse pratiquée sur une portion de circonférence et selon une orientation perpendiculaire à l'axe dudit noyau, dans laquelle vient agir un excentrique porté à l'extrémité d'un arbre tournant, ledit excentrique étant apte à coopérer avec l'un ou l'autre des deux bords de ladite rainure ou coulisse, à savoir un bord de chasse et un bord de rappel, en sorte que sa rotation communique audit instrument un déplacement alternatif axial tout en lui laissant une possibilité de mouvement de rotation autour de l'axe dudit instrument, et elle se caractérise essentiellement en ce que ladite rainure ou coulisse comprend deux parties qui s'étendent de part et d'autre d'une zone médiane, pour chacune desquelles la hauteur, c'est-à-dire la distance qui sépare le bord de chasse et le bord de rappel, est croissante depuis ladite zone médiane vers chacune des extrémités de ladite rainure ou coulisse.

Selon une caractéristique additionnelle de la tête de contre angle selon l'invention, la hauteur de la rainure ou coulisse à chacune des extrémités des deux parties, est supérieure ou égale à la valeur du diamètre de l'excentrique augmentée du double de la valeur d'excentration, tandis que la hauteur de la rainure ou coulisse dans sa zone médiane est comprise entre la hauteur de la rainure ou coulisse à chacune des extrémités desdites deux parties, et la valeur du diamètre de l'excentrique augmentée de celle d'excentration.

Selon une autre caractéristique additionnelle de la tête de contre angle selon l'invention, chacune deux parties de la rainure ou coulisse présente une inclinaison par rapport à une ligne de circonférence, les parties latérales extrêmes de ladite rainure ou coulisse allant s'éloignant du côté du noyau par lequel est maintenu ledit instrument.

De ce fait, l'angle que fait le bord de chasse par rapport à la ligne de circonférence est inférieur à celui que fait le bord de rappel par rapport à la même ligne.

Selon une autre caractéristique additionnelle de la tête de contre angle selon l'invention, la pente des parties latérales de la rainure ou coulisse est de 5° à 15° par rapport à une ligne de circonférence.

Selon une autre caractéristique additionnelle de la tête de contre angle selon l'invention, la pente des parties latérales de la rainure ou coulisse est déterminée en fonction du poids du noyau et de l'instrument qu'il porte, cette pente décroissant en même temps que ce poids.

Selon une autre caractéristique additionnelle de la tête de contre angle selon l'invention, la rainure ou coulisse s'étend sur un secteur angulaire supérieur ou égal à 100°.

Dans le cas de l'utilisation d'instruments endodontiques de section non ronde, il convient, du fait des déplacements particuliers desdits instruments, que ces derniers soient positionnés de manière précise sur la tête de contre angle.

Aussi, selon une autre caractéristique additionnelle de la tête de contre angle selon l'invention, la liaison entre l'instrument et le noyau porte instrument est réalisée au travers de moyens de maintien associés à des moyens d'indexage de la position angulaire dudit instrument par rapport audit noyau.

Selon une autre caractéristique additionnelle de la tête de contre angle selon l'invention, les moyens d'indexage consistent en des empreintes concordantes.

Les avantages et les caractéristiques de la tête de contre angle selon l'invention, ressortiront plus clairement de la description qui suit et qui se rapporte au dessin annexé, lequel en représente un mode de réalisation non limitatif.

Dans le dessin annexé :
- la figure 1 représente une vue schématique en coupe selon un plan médian diamétral d'une tête de contre angle selon l'invention.
- la figure 2 représente une vue schématique en perspective d'une partie de la même tête de contre angle.
- la figure représente une vue en élévation de la même partie.

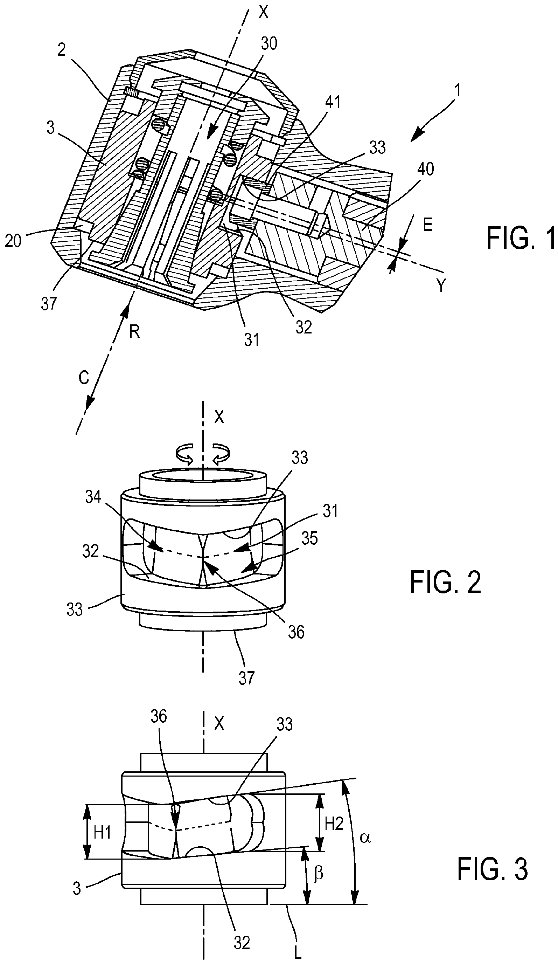

En référence à la figure 1, on peut voir une tête 1 de contre angle selon l'invention, qui comprend de manière connue en soi un corps 2 dans lequel est ménagée une cavité cylindrique 20, où est logé un noyau 3 porte-instrument. Le noyau 3 comporte des moyens 30 pour immobiliser un instrument non représenté, aptes à maintenir ledit instrument selon l'axe X du noyau 3.

On peut voir sur la figure 1 que le noyau 3 comporte en périphérie, dans sa paroi cylindrique, une rainure ou coulisse 31, dans laquelle prend place un excentrique 4 solidaire d'un arbre tournant 40. Sous l'action de la rotation de l'arbre tournant 40 selon l'axe Y, l'excentrique 4, qui est excentré d'une valeur E, vient au contact alternativement d'un bord de chasse 32 et d'un bord de rappel 33 de la rainure ou coulisse 31, en sorte de communiquer au noyau 3 et donc à l'instrument qu'il porte, un mouvement axial alternatif, dans des directions, respectivement, C et R.

En référence maintenant aux figures 2 et 3, on peut voir que la rainure ou coulisse 31 s'étend sur un secteur angulaire, en l'occurrence, non limitativement de 120°, et qu'elle comporte deux parties 34 et 35, s'étendant symétriquement de part d'autre d'une zone médiane 36, tout décrivant une inclinaison en sorte que leur extrémité s'éloignent du côté 37 du noyau 3 duquel fait saillie l'instrument, non représenté.

Par ailleurs, la distance H1 qui sépare le bord de chasse 32 du bord de rappel 33 au niveau de la zone médiane 36, est inférieure à la distance H2 qui sépare le bord de chasse 32 du bord de rappel 33 au niveau de chacune des extrémités des parties 34 et 35.

On notera qu'en raison de l'inclinaison des parties 34 et 35, la différence de dimensions de H1 et H2 se traduit par le fait que l'angle α que fait le bord de rappel 33 de l'une ou l'autre des parties 34 et 35, avec une ligne de circonférence L, est supérieur à l'angle β que fait le bord de chasse 32 avec la même ligne L. En l'occurrence l'angle α vaut 9°, tandis que l'angle β vaut 6°.

Ceci étant, la hauteur H2 est supérieure ou égale à la valeur du diamètre de l'excentrique 4 augmentée du double de la valeur E d'excentration, en sorte que la rotation de l'excentrique 4 aux extrémités de la rainure ou coulisse 31, ne génère aucune vibration.

La hauteur H1 est inférieure à H2 et supérieure à la valeur du diamètre de l'excentrique 4 augmentée de celle E d'excentration.

Ainsi, à titre d'exemple non limitatif, l'excentrique 4 présente un diamètre de 2,6 mm, il est excentré de 0,3 mm, H1 est égal à 2,95 mm et H2 est égal à 3,20 mm, en sorte que l'on obtienne une vibration minimale obligatoire de 0,25 mm au centre de la rainure ou coulisse 31, en H1, qui va en diminuant plus l'excentrique 4 se déplace vers les extrémités de l'une ou l'autre des parties 34 ou 35, pour aboutir à un déplacement obligatoire nul.

Le déplacement du noyau 3 sera fonction des forces de frottement sur les parois du canal que rencontrera l'instrument endodontique monté sur ce noyau 3.

Avec des forces de frottement faibles le déplacement longitudinal de l'instrument aura, en H1, une amplitude totale correspondant au double de la valeur d'excentration E, augmentée de la différence entre H1 et le diamètre de l'excentrique 4 augmenté de la valeur E d'excentration.

Avec des forces de frottement accrues, la pression des éléments actifs, des lames, de l'instrument endodontique sur les parois canalaires entraîne une rotation de l'instrument donc du noyau 3 dans la cavité 20, en sorte que l'excentrique 4 se retrouve à agir dans des zones de la fente ou rainure 31 où la hauteur est comprise entre H1 et H2, et donc à générer une amplitude plus faible, voire nulle, du déplacement de l'instrument.

Par ailleurs, au fur et à mesure des révolutions de l'excentrique, la friction des lames de l'instrument endodontique diminue, et l'influence de l'angle d'hélice des lames de l'instrument pour une rotation du noyau s'atténue. Il convient alors de permettre au noyau 3 porte-instrument de revenir à une zone où le déplacement obligatoire est plus important, c'est à dire dans une zone plus centrale 36 de la fente ou rainure 31.

C'est dans ce but que la coulisse ou rainure 31 présente une pente positive de ses parties extrêmes 34 et 35, qui peut être plus ou moins marquée en fonction du poids du noyau 3 équipé de l'instrument. Ainsi très rapidement, dès que la friction des lames de l'instrument endodontique sur les parois du canal disparaît, l'excentrique 4 reprend une rotation plus centrale dans la rainure ou coulisse 31.

Ces différents moyens mis en oeuvre permettent de réduire considérablement, l'effet « marteau piqueur » décrit précédemment et surtout l'effet d'aspiration de la lime d'Hedstroem quand celle-ci se trouve en friction forte avec les parois du canal.

Par ailleurs l'opérateur par des mouvements d'appui puis de traction d'amplitude faible sur le contre angle peut influencer l'amplitude de vibration obligatoire de la lime : un léger appui accentue la pression de la lime sur les parois du canal et induit une vibration obligatoire de faible amplitude, la traction légère permet de dégager la lime d'une friction trop marquée avec amplitude vibratoire faible pour une zone à friction faible permettant une vibration plus marquée.

On notera par ailleurs que pour réduire la vibration engendrée par le choc de l'excentrique 4 sur les bords 32 et 33 de la rainure ou coulisse 31, l'excentrique 4 est garni, sous la forme d'une bague 41 par exemple, d'un matériau amortissant qui peut être par exemple, non limitativement, du « Declafor-THX ».

On notera également que dans le cas d'utilisation d'instruments endodontiques de section non ronde, ovoïdes par exemple, il est prévu des moyens d'indexage de la position de l'instrument par rapport au noyau 3, lesquels moyens se présentent de préférence sous la forme d'empreintes condordantes que comportent de préférence les moyens 30 et l'instrument.

## Revendications

1. Tête de contre angle, servant à l'entraînement d'un instrument d'intervention sur des racines dentaires, constituée d'un corps (2) qui comporte une cavité (20) de forme générale cylindrique dans laquelle se déplace, axialement et en pivotement, un noyau porte-instrument (3), également de forme générale cylindrique, conformé pour recevoir et maintenir ledit instrument, ledit noyau porte-instrument (3) comportant latéralement une rainure ou coulisse (31) pratiquée sur une portion de circonférence et selon une orientation perpendiculaire à l'axe (X) dudit noyau (3), dans laquelle vient agir un excentrique (4) porté à l'extrémité d'un arbre tournant (40), ledit excentrique (4) étant apte à coopérer avec l'un ou l'autre des deux bords (32, 33) de ladite rainure ou coulisse (31), à savoir un bord de chasse (32) et un bord de rappel (33), en sorte que sa rotation communique audit instrument un déplacement alternatif axial (C, R) tout en lui laissant une possibilité de mouvement de rotation autour de l'axe (X) dudit instrument, **caractérisée en ce que** ladite rainure ou coulisse (31) comprend deux parties (34, 35) qui s'étendent de part et d'autre d'une zone médiane (36), pour chacune desquelles la hauteur, c'est-à-dire la distance qui sépare le bord de chasse (32) et le bord de rappel (33), est croissante depuis ladite zone médiane (36) vers chacune des extrémités de ladite rainure ou coulisse (31) .

2. Tête de contre angle (1) selon la revendication 1 **caractérisée en ce que** la hauteur (H2) de la rainure ou coulisse (31) à chacune des extrémités des deux parties (34, 35), est supérieure ou égale à la valeur du diamètre de l'excentrique (4) augmentée du double de la valeur d'excentration (E), tandis que la hauteur (H1) de la rainure ou coulisse (31) dans sa zone médiane (36) est comprise entre la hauteur (H2) de la rainure ou coulisse (31) à chacune des extrémités desdites deux parties (34, 35), et la valeur du diamètre de l'excentrique (4) augmentée de celle d'excentration (E).

3. Tête de contre angle (1) selon la revendication 1 ou la revendication 2, **caractérisée en ce que** chacune deux parties (34, 35) de la rainure ou coulisse (31) présente une inclinaison par rapport à une ligne de circonférence (L), les parties latérales extrêmes de ladite rainure ou coulisse (31) allant en s'éloignant du côté (37) du noyau (3) par lequel est maintenu ledit instrument.

4. Tête de contre angle (1) selon la revendication 3, **caractérisée en ce que** la pente des parties latérales (34, 35) de la rainure ou coulisse (31) est de 5° à 15° par rapport à une ligne de circonférence (L) .

5. Tête de contre angle (1) selon la revendication 3 ou la revendication 4, **caractérisée en ce que** la pente des parties latérales (34, 35) de la rainure ou coulisse (31) est déterminée en fonction du poids du noyau (3) et de l'instrument qu'il porte, cette pente décroissant en même temps que ce poids.

6. Tête de contre angle (1) selon l'une quelconques des revendications 1 à 5, **caractérisée en ce que** la rainure ou coulisse (31) s'étend sur un secteur angulaire supérieur ou égal à 100°.

7. Tête de contre angle (1) selon l'une quelconques des revendications 1 à 6, **caractérisée en ce que** l'excentrique (4) est garni d'un matériau amortissant.

8. Tête de contre angle (1) selon la revendication 7, **caractérisée en ce que** le matériau amortissant se présente sous la forme d'une bague (41) .

9. Tête de contre angle (1) selon l'une quelconques des revendications 1 à 8, **caractérisée en ce que** la liaison entre l'instrument et le noyau porte-instrument (3) est réalisée au travers de moyens de maintien associés à des moyens d'indexage de la position angulaire dudit instrument par rapport audit noyau (3).

10. Tête de contre angle (1) selon la revendication 7, **caractérisée en ce que** les moyens d'indexage consistent en des empreintes concordantes.

## Patentansprüche

1. Winkelstückkopf, der als Antrieb eines Instruments für den Eingriff an Zahnwurzeln dient, gebildet von einem Körper (2), der einen allgemein zylindrischen Hohlraum (20) aufweist, in welchem sich axial und schwenkend ein ebenfalls allgemein zylindrischer Instrumententrägerkern (3) verlagert, der ausgebildet ist, um das Instrument zu empfangen und zu halten, wobei der Instrumententrägerkern (3) seitlich eine Rille oder Schiene (31) aufweist, die auf einem Umfangsabschnitt und gemäß einer senkrechten Ausrichtung zur Achse (X) des Kerns (3) gearbeitet ist, in welcher ein Exzenter (4) wirkt, der am Ende einer drehenden Welle (40) getragen wird, wobei der Exzenter (4) imstande ist, mit dem einen oder dem anderen der zwei Ränder (32, 33) der Rille oder Schiene (31), nämlich einem abweisenden Rand (32) und einem Rückholrand (33), zusammenzuwirken, so dass seine Rotation dem Instrument eine alternative axiale Verlagerung (C, R) kommuniziert, wobei ihm eine Möglichkeit einer Rotationsbewegung um die Achse (X) des Instruments verbleibt, **dadurch gekennzeichnet, dass** die Rille oder Schiene (31) zwei Teile (34, 35) umfasst, die sich beiderseits einer mittleren Zone (36) erstrecken, für welche die Höhe, das heißt, der Abstand, welcher den abweisenden Rand (32) und den Rückholrand (33) trennt, ab der mittleren Zone (36) zu jedem der Enden der Rille oder Schiene (31) zunimmt.

2. Winkelstückkopf (1) nach Anspruch 1, **dadurch gekennzeichnet, dass** die Höhe (H2) der Rille oder Schiene (31) an jedem der Enden der zwei Teile (34, 35) größer als oder gleich dem Wert des Durchmessers des Exzenters (4) ist, erhöht um das Doppelte des Exzentrierwerts (E), wogegen die Höhe (H1) der Rille oder Schiene (31) in ihrer mittleren Zone (36) zwischen der Höhe (H2) der Rille oder Schiene (31) an jedem der Enden der zwei Teile (34, 35) und dem Wert des Durchmessers des Exzenters (4), erhöht um den der Exzentrierung (E), inbegriffen ist.

3. Winkelstückkopf (1) nach Anspruch 1 oder Anspruch 2, **dadurch gekennzeichnet, dass** beide Teile (34, 35) der Rille oder Schiene (31) eine Neigung in Bezug auf eine Umfangslinie (L) aufweisen, wobei sich die äußersten seitlichen Teile der Rille oder Schiene (31) bewegen, indem sie sich von der Seite (37) des Kerns (3), von der das Instrument gehalten wird, entfernen.

4. Winkelstückkopf (1) nach Anspruch 3, **dadurch gekennzeichnet, dass** die Neigung der seitlichen Teile (34, 35) der Rille oder Schiene (31) 5° bis 15° in Bezug auf eine Umfangslinie (L) beträgt.

5. Winkelstückkopf (1) nach Anspruch 3 oder Anspruch 4, **dadurch gekennzeichnet, dass** die Neigung der seitlichen Teile (34, 35) der Rille oder Schiene (31) in Abhängigkeit vom Gewicht des Kerns (3) und des Instruments, das er trägt, bestimmt ist, wobei diese Neigung gleichzeitig mit dem Gewicht abnimmt.

6. Winkelstückkopf (1) nach einem der Ansprüche 1 bis 5, **dadurch gekennzeichnet, dass** sich die Rille oder Schiene (31) über einen Winkelsektor größer oder gleich 100° erstreckt.

7. Winkelstückkopf (1) nach einem der Ansprüche 1 bis 6, **dadurch gekennzeichnet, dass** der Exzenter (4) mit einem dämpfenden Material belegt ist.

8. Winkelstückkopf (1) nach Anspruch 7, **dadurch gekennzeichnet, dass** das dämpfende Material in Form eines Rings (41) vorliegt.

9. Winkelstückkopf (1) nach einem der Ansprüche 1 bis 8, **dadurch gekennzeichnet, dass** die Verbindung zwischen dem Instrument und dem Instrumententrägerkern (3) anhand von Haltemitteln durchgeführt ist, die Indexierungsmitteln der Winkelposition des Instruments in Bezug auf den Kern (3) zugeordnet sind.

10. Winkelstückkopf (1) nach Anspruch 7, **dadurch gekennzeichnet, dass** die Indexierungsmittel aus übereinstimmenden Abdrücken bestehen.

## Claims

1. A counter-angle head, used to drive an instrument for procedures on dental roots, made up of a body (2) that comprises a generally cylindrical cavity (20) in which an instrument holder core (3), also generally cylindrical, configured to receive and maintain said instrument, moves, axially and by pivoting, said instrument holder core (3) laterally comprising a groove or slot (31) formed on a circumference portion and with an orientation perpendicular to the axis (X) of said core (3), in which an eccentric (4) acts that is supported at the end of a rotary shaft (40), said eccentric (4) being able to cooperate with one or the other of the two edges (32, 33) of said groove or slot (31), i.e., a driving edge (32) and a return edge (33), such that its rotation communicates an axial alternating movement (C, R) to said instrument while allowing it a possibility of rotational movement around the axis (X) of said instrument, **characterized in that** said groove or slot (31) includes two portions (34, 35) that extend on either side of a median zone (36), for each of which the height, i.e., the distance that separates the driving edge (32) and the return edge (33), increases from said median zone (36) toward each of the ends of said groove or slot (31).

2. The counter-angle head (1) according to claim 1, **characterized in that** the height (H2) of the groove or slot (31) at each of the ends of the two portions (34, 35) is greater than or equal to the value of the diameter of the eccentric (4) increased by twice the value of the eccentricity (E), while the height (H1) of the groove or slot (31) in its median zone (36) is between the height (H2) of the groove or slot (31) at each of the ends of said two portions (34, 35), and the value of the diameter of the eccentric (4) increased by the eccentricity value (E).

3. The counter-angle head (1) according to claim 1 or claim 2, **characterized in that** each two portions (34, 35) of the groove or slot (31) has an incline relative to a circumference line (L), the extreme side portions of said groove or slot (31) moving away from the side (37) of the core (3) by which said instrument is maintained.

4. The counter-angle head (1) according to claim 3, **characterized in that** the slope of the side portions (34, 35) of the groove or slot (31) is from 5° to 15° relative to a circumference line (L).

5. The counter-angle head (1) according to claim 3 or claim 4, **characterized in that** the slope of the side portions (34, 35) of the groove or slot (31) is determined as a function of the weight of the core (3) and the instrument that it bears, this slope decreasing at the same time as this weight.

6. The counter-angle head (1) according to any one of claims 1 to 5, **characterized in that** the groove or slot (31) extends over an angular sector greater than or equal to 100°.

7. The counter-angle head (1) according to any one of claims 1 to 6, **characterized in that** the eccentric (4) is trimmed with a shock absorbing material.

8. The counter-angle head (1) according to claim 7, **characterized in that** the shock absorbing material is in the form of a ring (41).

9. The counter-angle head (1) according to any one of claims 1 to 8, **characterized in that** the connection between the instrument and the instrument holder core (3) is done via maintaining means associated with means for indexing the angular position of said instrument relative to said core (3).

10. The counter-angle head (1) according to claim 7, **characterized in that** the indexing means consist of matching cavities.
